(19) Europäisches Patentamt
European Patent Office
Office européen des brevets

(11) **EP 2 547 891 B1**

(12) **EUROPÄISCHE PATENTSCHRIFT**

(45) Veröffentlichungstag und Bekanntmachung des Hinweises auf die Patenterteilung:
**14.05.2014 Patentblatt 2014/20**

(21) Anmeldenummer: **11708032.5**

(22) Anmeldetag: **10.03.2011**

(51) Int Cl.:
***F02F 1/42*** *(2006.01)*

(86) Internationale Anmeldenummer:
**PCT/EP2011/053634**

(87) Internationale Veröffentlichungsnummer:
**WO 2011/113747 (22.09.2011 Gazette 2011/38)**

(54) **ZYLINDERKOPF**

CYLINDER HEAD

CULASSE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **18.03.2010 AT 4422010**

(43) Veröffentlichungstag der Anmeldung:
**23.01.2013 Patentblatt 2013/04**

(73) Patentinhaber: **AVL List GmbH**
**8020 Graz (AT)**

(72) Erfinder:
• **GLANZ, Reinhard**
**A-8042 Graz (AT)**

• **SUPPAN, Manfred**
**A-8301 Kainbach (AT)**
• **SCHWARZL, Markus**
**A-8323 St. Marein Bei Graz (AT)**
• **KORES, Markus**
**A-8075 Hart/Graz (AT)**

(74) Vertreter: **Babeluk, Michael**
**Patentanwalt**
**Mariahilfer Gürtel 39/17**
**1150 Wien (AT)**

(56) Entgegenhaltungen:
**EP-A1- 2 017 454    JP-A- 60 261 926**
**JP-A- 2000 303 846    JP-U- 54 046 914**
**JP-U- 62 003 935**

**EP 2 547 891 B1**

## Beschreibung

Die Erfindung betrifft einen Zylinderkopf für eine Brennkraftmaschine mit einer Einlasskanalanordnung mit zumindest zwei Einlassöffnungen pro Zylinder, welche von einer seitlichen Einlassflanschfläche etwa annähernd gleich entfernt sind, wobei zur ersten Einlassöffnung ein als Spiralkanal ausgebildeter erster Einlasskanal und zur zweiten Einlassöffnung ein zweiter Einlasskanal führt und die beiden Einlasskanäle bereits außerhalb des Bereiches des Zylinders durch eine Trennwand voneinander getrennt sind, und wobei ein Bezugswinkel zwischen 230° und 330° beträgt, welcher Bezugswinkel in Richtung einer Drallströmung im Zylinder definiert ist zwischen einer die Ventilmitte der ersten Einlassöffnung und die Zylindermitte verbindenden Bezugsgeraden einerseits und einem einen ersten Eintrittsquerschnitt des ersten Einlasskanals in einen Ventilraum festlegenden, von der Ventilmitte der ersten Einlassöffnung ausgehenden Radius andererseits, wobei eine Tangente an eine Spiralaußenkontur im Bereich des ersten Eintrittsquerschnittes parallel zur Querebene des Zylinderkopfes ausgebildet ist und der erste Einlasskanal im Wesentlichen normal zur-Einlassflanschfläche verläuft.

Aus der AT 402.433 B ist ein Zylinderkopf für eine Brennkraftmaschine mit je zwei hängend angeordneten Einlass- und Auslassventilen für jeden Zylinder bekannt, von denen jeweils ein Einlass- und ein Auslassventil bezüglich der Zylinderachse einander gegenüberliegen und die durch die Achsen der gegenüberliegenden Ventile gelegten Ebenen zueinander einen Winkel von 90° einschließen. Der zum ersten Einlassventil führende Spiralkanal und der zum zweiten Einlassventil führende Tangentialkanal vereinigen sich zu einem einzigen Kanal, der von derselben Seitenwand des Zylinderkopfes ausgeht. Der Spiralkanal ist dabei als sogenannter offener Kanal ausgebildet, wobei außerhalb des Zylinderbereiches keine Trennwand zwischen dem Spiralkanal und dem Tangentialkanal vorgesehen ist. Dies hat den Nachteil, dass die Festigkeit des Zylinderkopfes vermindert wird.

Die AT 004.876 U1 beschreibt eine Brennkraftmaschine mit zwei Einlasskanälen pro Zylinder, welche über Einlassöffnungen in einen Brennraum münden, wobei ein erster Einlasskanal als Spiralkanal ausgebildet ist, der einen Bezugswinkel größer als etwa 230° aufweist, welcher Bezugswinkel in Richtung einer Drallströmung im Zylinder definiert ist zwischen einer Ventilmittelpunkt und Zylindermittelpunkt verbindenden Geraden einerseits und einem einen ersten Eintrittsquerschnitt des ersten Einlasskanals in einen Ventilraum festlegenden, vom Ventilmittelpunkt ausgehenden Radius andererseits. Ein derartiger Kanal wird auch als atypischer Spiralkanal bezeichnet. Der erste Einlasskanal tritt unter einem Winkel in den Ventilraum so ein, dass die Tangente an die Spiralenaußenkontur durch die Zylindermitte geht. Die Spiralenzunge ist dabei nur schwach ausgeprägt und weist einen relativ großen Zungenradius auf. Die Hauptrichtung des Kanalzulaufteiles ist hier nicht normal zur Einlassflanschfläche ausgebildet.

Die WO 79/00707 zeigt einen Zylinderkopf für eine Brennkraftmaschine mit zwei zu jeweils einer Einlassöffnung führenden parallelen Einlasskanälen, welche bereits außerhalb des Zylinderbereiches durch eine Trennwand voneinander getrennt sind. Die Einlasskanalanordnung weist ein um etwa 45° verdrehtes Ventilbild auf. Der erste Einlasskanal ist nicht drallerzeugend ausgebildet. Eine ähnliche Einlasskanalanordnung ist auch aus der DE 38 36 550 A1 bekannt.

Die EP 2 017 454 A1 beschreibt eine Einlasskanalstruktur für eine Brennkraftmaschine mit einer Einlasskanalanordnung mit zwei Einlassöffnungen pro Zylinder, welche von einer seitlichen Einlassflanschfläche etwa annähernd gleich entfernt sind, wobei zur ersten Einlassöffnung ein als Spiralkanal ausgebildeter erster Einlasskanal und zur zweiten Einlassöffnung ein zweiter Einlasskanal führt. Die beiden Einlasskanäle sind außerhalb des Bereiches des Zylinder durch eine Trennwand getrennt. Ein in Richtung der Drallströmung definierter Bezugswinkel zwischen einer die Zylindermitte und die Ventilmitte verbindenden Geraden und einem ersten Eintrittsquerschnitt in den Ventilraum liegt in einem Bereich zwischen etwa 230° und 330°. Eine Tangente an eine Spiralaußenkontur im Bereich des ersten Eintrittsquerschnittes verläuft im Wesentlichen etwa in Richtung der Querebene des Zylinderkopfes. Der erste Einlasskanal ist im Wesentlichen normal zur Einlassflanschfläche angeordnet. Eine ähnliche Einlasskanalstruktur wird in den Veröffentlichungen JP 60 261926 A1, JP 62 003935 U oder JP 2000 303846 A gezeigt.

Ein weiterer drallerzeugender Einlasskanal ist durch die JP 54 046914 U bekannt.

Bekannte Einlasskanalanordnungen haben den Nachteil, dass entweder nur geringe Drallzahlen erreichbar oder zur Ausbildung eines hohen Dralles eine platzaufwendige geschwungene Kanalgestaltung nötig ist.

Aufgabe der vorliegenden Erfindung ist es, diese Nachteile zu vermeiden und eine einfach zu fertigende und kompakte Einlasskanalanordnung vorzuschlagen, mit welcher eine hohe Ladungsbewegung im Zylinder ermöglicht werden kann.

Erfindungsgemäß wird dies dadurch erreicht, dass zwischen einer äußeren Einlasskanalwand des ersten Einlasskanals und der Spiralzunge eine Übergangsfläche ausgebildet ist, deren Tangente in einem Wendepunkt oder geraden Abschnitt mit einer Längsebene des Zylinderkopfes einen Winkel $0° \leq \beta \leq 20°$ einschließt. Dadurch kann ein hoher Drall und eine starke Ladungsbewegung erzielt werden.

Besonders vorteilhaft ist es, wenn die beiden Einlasskanäle im Wesentlichen parallel zueinander, vorzugsweise im Wesentlichen parallel zu einer Querebene des Zylinderkopfes, angeordnet sind, wobei vorzugsweise die beiden Einlasskanäle von einem gemeinsamen Einlasshauptkanal ausgehen. Der Beginn der die beiden Einlasskanäle trennenden Kanalwand kann zwischen der Einlassflanschfläche und dem Bereich des Zylinders angeordnet sein.

In einer besonders bevorzugten Ausführungsvariante der Erfindung ist vorgesehen, dass sich die Spiralzunge des ersten Einlasskanals im Wesentlichen normal zur Kanalmittellinie erstreckt und dass der Zungenradius R der Spiralzunge die Bedingung erfüllt: R = (0.05 bis 0.1) * $d_v$, wobei $d_v$ der innere Ventilsitzdurchmesser ist.

Ein hoher Drall kann erzielt werden, wenn die maximale Erstreckung der Spiralzunge zwischen 40% und 70% der dort gegebenen Zulaufbreite des ersten Einlasskanals beträgt, wobei vorzugsweise der normal zum ersten Einlassquerschnitt gemessene Abstand c zwischen der Spiralzunge und einer Ventilmitte der ersten Einlassöffnung die Bedingung erfüllt: c = (0.1 bis 0.6) * $d_v$.

Weiters ist es vorteilhaft für die Ausbildung eines hohen Dralles, wenn der äußeren Einlasskanalwand und der Übergangsfläche ein Krümmungsradius ausgebildet sein, welcher vorzugsweise etwa (0.1 bis 0.3) * $d_v$ beträgt. Um Strömungsablösungen zu vermeiden, ist vorzugsweise weiters vorgesehen, dass die Übergangsfläche tangential in eine innere Wand des den Ventilschaft des ersten Einlasskanals umlaufenden Spiralendaches übergeht.

Die beschriebene Einlasskanalanordnung ist auch besonders für solche Brennkraftmaschinen geeignet, bei denen ein seitliches Verschieben des ersten Einlasskanalzulaufes nicht möglich ist, beispielsweise bei einer Brennkraftmaschine mit untenliegender Nockenwelle, bei der die beiden Einlasskanäle zwischen jeweils zwei Stößelstangen angeordnet werden müssen. Der Platz neben dem ersten Einlasskanal kann auch für Ölrücklauf- oder Blowbykanäle genutzt werden. Weiters bietet die beschriebene Einlasskanalanordnung den Vorteil, dass der Platz seitlich am Zylinderkopf besser für Nebenaggregate genutzt werden kann.

Die Erfindung wird im Folgenden anhand der Figuren näher erläutert. Es zeigen schematisch:

Fig. 1    eine Einlasskanalanordnung eines Zylinders eines erfindungemäßen Zylinderkopfes in einer ersten Ausführungsvariante;

Fig. 2    die Einlasskanalanordnung in einem Schnitt gemäß der Linien II - II in Fig. 1;

Fig. 3    die Einlasskanalanordnung in einem Schnitt gemäß der Linien III - III in Fig. 1;

Fig. 4    die Einlasskanalanordnung in einem Schnitt gemäß der Linien IV - IV in Fig. 1; und

Fig. 5    eine Einlasskanalanordnung eines Zylinders eines erfindungemäßen Zylinderkopfes in einer zweiten Ausführungsvariante.

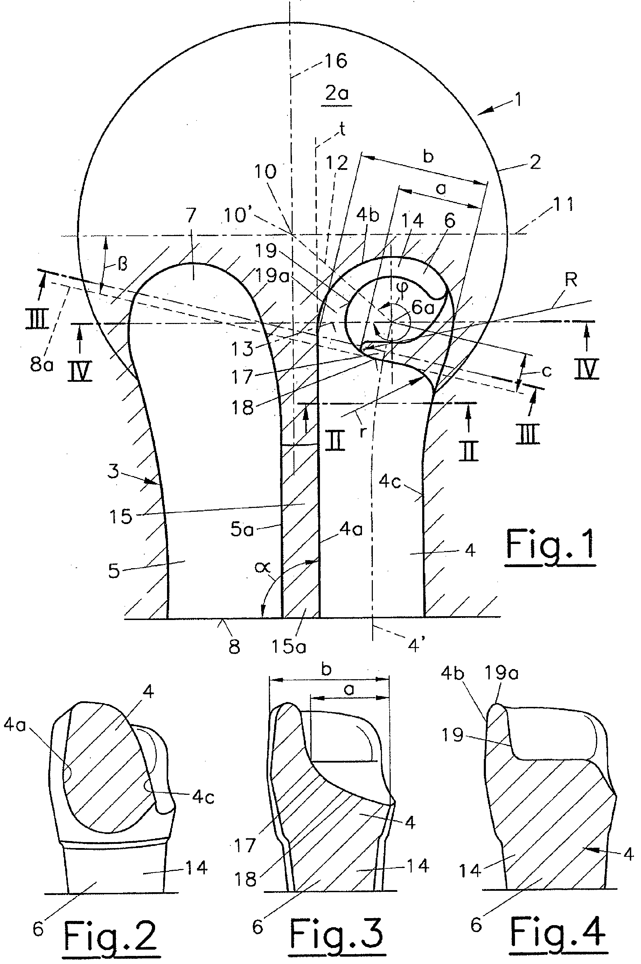

Die Fig. 1 zeigt schematisch einen Zylinderkopf 1 einer Brennkraftmaschine mit zumindest einem Zylinder 2, wobei pro Zylinder 2, eine Einlasskanalanordnung 3 mit einem ersten Einlasskanal 4 und einem zweiten Einlasskanal 5 vorgesehen ist. Die beiden Einlasskanäle 4, 5 münden jeweils über eine erste bzw. zweite Einlassöffnung 6, 7 in den Zylinderraum 2a. Die Einlasskanalanordnung 3 geht von einer seitlichen Einlassflanschfläche 8 des Zylinderkopfes 1 aus.

Der erste Einlasskanal 4 ist als atypischer Spiralkanal, der zweite Einlasskanal 5 als Neutral-, Spiral oder als Tangentialkanal ausgebildet. Wie aus der Fig. 1 hervorgeht, weist der erste Einlasskanal 4 einen charakteristischen Bezugswinkel φ auf, welcher in Richtung einer Drallströmung definiert ist zwischen einer die Ventilmitte 6a und die Zylindermitte 10 verbindenden Geraden 12 einerseits und einem einen ersten Eintrittsquerschnitt 13 des ersten Einlasskanals 4 in den Ventilraum 14 festlegenden, von der Ventilmitte 6a ausgehenden Radius 13 andererseits, gemessen in Drallrichtung.

Der Bezugswinkel φ beträgt etwa zwischen 230° und 330°, im Ausführungsbeispiel etwa 315°.

Zwischen den einander zugekehrten inneren Einlasskanalwänden 4a, 5a der beiden Einlasskanälen 4, 5 ist eine Trennwand 15 ausgebildet, wobei die Wandzunge 15a weit außerhalb des Bereiches des Zylinders 2, also zwischen der Einlassflanschfläche 8 und dem Zylinder 2, liegt. Die Einlasskanäle 4, 5 verlaufen zwischen der Wandzunge 15a und den Einlassöffnungen 6, 7 im Wesentlichen normal zur Einlassflanschfläche 8, sowie im Wesentlichen parallel zueinander und parallel zu einer Querebene 16 des Zylinderkopfes 1, welche normal zur durch die Zylinderachse 10' verlaufenden Längsebene 11 ausgebildet ist. Eine Tangente t an die Spiralaußenkontur 4b des ersten Einlasskanals 4 ist im Bereich des ersten Eintrittsquerschnittes 13 im Wesentlichen parallel zur Querebene 16 des Zylinderkopfes 1 ausgebildet.

Die Spiralzunge 17 des ersten Einlasskanals 4 erstreckt sich im Wesentlichen normal zur Kanalmittellinie 4' von der der Querebene 16 entfernteren äußeren Kanalwand 4c ausgehend in Richtung der inneren Kanalwand 4a, wobei die maximale Erstreckung a zwischen 40% und 70% der unmittelbar stromaufwärts der Spiralzunge 17 gegebenen Zulaufbreite b des ersten Einlasskanals 4 beträgt. Der Zungenradius R der Spiralzunge 17 ist so ausgelegt, dass die Bedingung

$$R = (0.05 \text{ bis } 0.1) * d_v, \tag{1}$$

erfüllt ist, wobei $d_v$ der innere Ventilsitzdurchmesser ist.

Weiters ist die Spiralzunge 17 so ausgebildet, dass ein normal zum ersten Einlassquerschnitt 13 gemessener Abstand c zwischen der Spiralzunge 17 und der Ventilmitte 6a der ersten Einlassöffnung 6 die Bedingung erfüllt:

$$c = (0.1 \text{ bis } 0.6) * d_v. \tag{2}$$

Zwischen der äußeren Einlasskanalwand 4c des ersten Einlasskanals 4 und der Spiralzunge 17 ist eine Übergangsfläche 18 ausgebildet, deren Tangente 18a in einem Wendepunkt oder geraden Abschnitt mit einer Längsebene 11 des Zylinderkopfes 1 einen Winkel

$$0° \leq \beta \leq 20° \tag{3}$$

einschließt. Die Übergangsfläche 18 geht vorteilhafter Weise tangential in eine innere Wand 19 des den Ventilschaft des ersten Einlasskanals 4 umlaufenden Spiralendaches 19a über. Dabei ist zwischen der äußeren Einlasskanalwand 4c des ersten Einlasskanals 4 und der Übergangsfläche 18 ein Krümmungsradius r ausgebildet, welcher beispielsweise etwa

$$r = (0.1 \text{ bis } 0.3) * d_v \tag{4}$$

beträgt.

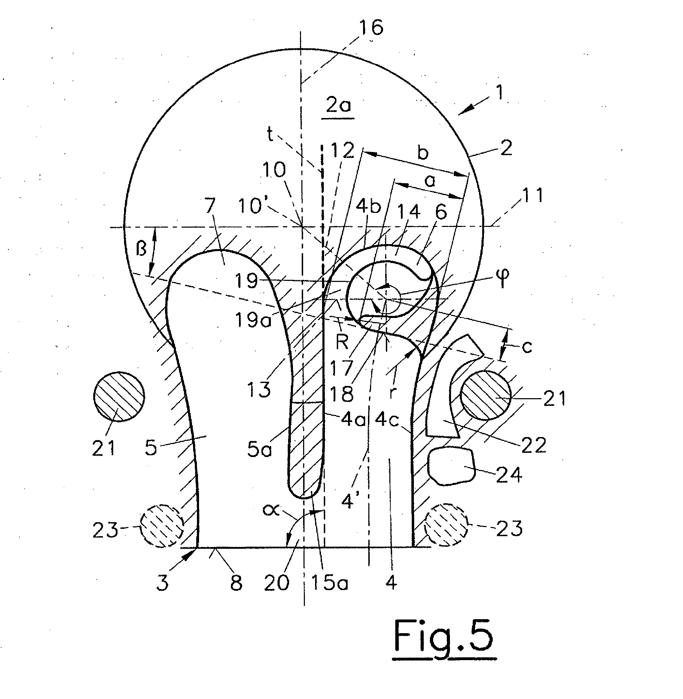

Während bei der in Fig. 1 gezeigten Ausführung die Einlasskanäle 4, 5 von der Einlassflanschfläche 8 weg getrennt ausgebildet sind, gehen bei der in Fig. 5 dargestellten Ausführung die beiden Einlasskanäle 4, 5 innerhalb des Zylinderkopfes 1 von einem gemeinsamen Einlasshauptkanal 20 aus. Die Wandzunge 15a ist dabei zwischen der Einlassflanschfläche 8 und dem Zylinder 2 angeordnet. Eine möglichst lange Trennwand 15 zwischen den beiden Ästen der Einlasskanäle 4, 5 trägt zur hohen Festigkeit des Zylinderkopfes 1 bei.

Die bereits außerhalb des Bereiches des Zylinders 2 beginnende Trennwand 15 trägt zur hohen Festigkeit des Zylinderkopfes 1 bei. Sowohl durch den als atypischer Spiralkanal gestalteten ersten Einlasskanal 4, als auch den beispielsweise durch einen Tangentialkanal gebildeten zweiten Einlasskanal 5, wird im Zylinder 2 ein Drall um die Zylindermitte 10 erzeugt.

Wie in Fig. 5 angedeutet ist, kann die Zylinderkopfschraube 21 gegenüber dem ersten Einlasskanal 4, zum Beispiel zur Optimierung der Krafteinleitung, freigestellt sein, wobei im Raum zwischen Zylinderkopfschraube 21 und dem ersten Einlasskanal 4 eventuell ein Kühlwassermantel 22 angeordnet werden kann. Die beschrieben Einlasskanalanordnung 3 ist auch besonders für solche Brennkraftmaschinen geeignet, bei denen ein seitliches Verschieben des ersten Einlasskanalzulaufes nicht möglich ist, beispielsweise bei einer Brennkraftmaschine mit untenliegender Nockenwelle, bei der die beiden Einlasskanäle 4, 5 zwischen jeweils zwei Stößelstangen 23 angeordnet werden müssen. Der Platz neben dem ersten Einlasskanal 4 kann auch für Ölrücklauf- oder Blowbykanäle 24 genutzt werden. Weiters bietet die beschriebene Einlasskanalanordnung 3 den Vorteil, dass der Platz seitlich am Zylinderkopf 1 besser für Nebenaggregate genutzt werden kann.

**Patentansprüche**

1. Zylinderkopf (1) für eine Brennkraftmaschine mit einer Einlasskanalanordnung (3) mit zumindest zwei Einlassöffnungen (6, 7) pro Zylinder (2), welche von einer seitlichen Einlassflanschfläche (8) etwa annähernd gleich entfernt sind, wobei zur ersten Einlassöffnung (6) ein als Spiralkanal ausgebildeter erster Einlasskanal (4) und zur zweiten Einlassöffnung (7) ein zweiter Einlasskanal (5) führt und die beiden Einlasskanäle (4, 5) bereits außerhalb des Bereiches des Zylinders (2) durch eine Trennwand (15) voneinander getrennt sind, und wobei ein Bezugswinkel (φ) zwischen 230° und 330° beträgt, welcher Bezugswinkel (φ) in Richtung einer Drallströmung im Zylinder (2) definiert ist zwischen einer die Ventilmitte (6a) der ersten Einlassöffnung (6) und die Zylindermitte (10) verbindenden Bezugsgeraden (12) einerseits und einem einen ersten Eintrittsquerschnitt (13) des ersten Einlasskanals (4) in einen Ventilraum (14) festlegenden, von der Ventilmitte (6a) der ersten Einlassöffnung (6) ausgehenden Radius (13) andererseits, wobei eine Tangente (t) an eine Spiralaußenkontur (4b) im Bereich des ersten Eintrittsquerschnittes (13) parallel zur Querebene (16) des Zylinderkopfes (1) ausgebildet ist und der erste Einlasskanal (4) im Wesentlichen normal zur Einlassflanschfläche (8) verläuft, **dadurch gekennzeichnet, dass** zwischen einer äußeren Einlasskanalwand (4c) des ersten Einlasskanals (4) und der Spiralzunge (17) eine Übergangsfläche (18) ausgebildet ist, deren Tangente (18a) in einem Wendepunkt oder geraden Abschnitt mit einer Längsebene (11) des Zylinderkopfes (1) einen Winkel (β) $0° \leq β \leq 20°$ einschließt.

2. Zylinderkopf (1) nach Anspruch 1, **dadurch gekennzeichnet, dass** der erste Einlasskanal (4) im Wesentlichen gerade ausgebildet ist.

3. Zylinderkopf (1) nach Anspruch 1 oder 2, **dadurch gekennzeichnet, dass** die beiden Einlasskanäle (4, 5) im Wesentlichen parallel, vorzugsweise auch im Wesentlichen parallel zu einer Querebene (16) des Zylinderkopfes (1), angeordnet sind.

4. Zylinderkopf (1) nach einem der Ansprüche 1 bis 3, **dadurch gekennzeichnet, dass** die beiden Einlasskanäle (4, 5) von einem gemeinsamen Einlasshauptkanal (20) ausgehen.

5. Zylinderkopf (1) nach einem der Ansprüche 1 bis 4, wobei der erste Einlasskanal (4) eine Spiralzunge (17) aufweist, **dadurch gekennzeichnet, dass** der Zungenradius R der Spiralzunge (17) die Bedingung erfüllt: R = (0.05 bis 0.1) * $d_v$, wobei $d_v$ der innere Ventilsitzdurchmesser ist.

6. Zylinderkopf (1) nach einem der Ansprüche 1 bis 5, wobei der erste Einlasskanal (4) eine Spiralzunge (17) aufweist, **dadurch gekennzeichnet, dass** sich die Spiralzunge (17) des ersten Einlasskanals (4) im Wesentlichen normal zur Kanalmittellinie (4') erstreckt.

7. Zylinderkopf (1) nach einem der Ansprüche 1 bis 6, wobei der erste Einlasskanal (4) eine Spiralzunge (17) aufweist, **dadurch gekennzeichnet, dass** die maximale Erstreckung (a) der Spiralzunge (17) normal zur Kanalmittellinie (4') zwischen 40% und 70% der unmittelbar stromaufwärts der Spiralzunge (17) gegebenen Zulaufbreite (b) des ersten Einlasskanals (4) beträgt.

8. Zylinderkopf (1) nach einem der Ansprüche 1 bis 7, wobei der erste Einlasskanal (4) eine Spiralzunge (17) aufweist, **dadurch gekennzeichnet, dass** ein normal zum ersten Einlassquerschnitt gemessene Abstand c zwischen der Spiralzunge und einer Ventilmitte der ersten Einlassöffnung die Bedingung erfüllt: c = (0.1 bis 0.6) * $d_v$, wobei $d_v$ der innere Ventilsitzdurchmesser ist.

9. Zylinderkopf (1) nach einem der Ansprüche 1 bis 8, **dadurch gekennzeichnet, dass** zwischen äußerer Einlasskanalwand (4c) des ersten Einlasskanals (4) und der Übergangsfläche (18) ein Krümmungsradius (r) ausgebildet ist, welcher vorzugsweise etwa (0.1 bis 0.3) * $d_v$ beträgt, wobei $d_v$ der innere Ventilsitzdurchmesser ist.

10. Zylinderkopf (1) nach einem der Anspruch 1 bis 9, wobei der erste Einlasskanal (4) eine Spiralzunge (17) aufweist, **dadurch gekennzeichnet, dass** die Übergangsfläche (18) tangential in eine innere Wand (19) des den Ventilschaft des ersten Einlasskanals (4) umlaufenden Spiralendaches (19a) übergeht.

## Claims

1. Cylinder head (1) for an internal combustion engine, comprising an inlet channel arrangement (3) having at least two inlet openings (6, 7) per cylinder (2) which are at approximately the same distance away from a lateral inlet flange surface (8), wherein a first inlet channel (4) embodied as a spiral channel leads to the first inlet opening (6) and a second inlet channel (5) leads to the second inlet opening (7) and both inlet channels (4, 5) are already separated from each other by a separation wall (15) outside of the cylinder area (2), and wherein a reference angle (φ) is between 230° and 330°, which reference angle (φ) is defined in the direction of a swirling flow in the cylinder (2) between a reference line (12) joining the centre of the valve (6a) of the first inlet opening (6) and the centre of the cylinder (10), on the one hand, and a radius (13) starting from the centre of the valve (6a) of the first inlet opening (6), determining a first inlet cross-section (13) of the first inlet channel (4) in a valve chamber (14), on the other hand, wherein a tangent (t) to a spiral outer contour (4b) is formed in the region of the first inlet cross-section (13) parallel to the transverse plane (16) of the cylinder head (1) and the first inlet channel (4) runs substantially normally to the inlet flange surface (8), **characterised in that** between an outer inlet channel wall (4c) of the first inlet channel (4) and the spiral tongue (17), a transition surface (18) is formed, the tangent (18a) whereof encloses an angle (β) 0° ≤ β ≤ 20° at a turning point or straight section with a longitudinal plane (11) of the cylinder head (1).

2. The cylinder head (1) according to claim 1, **characterised in that** the first inlet channel (4) is configured to be substantially straight.

3. The cylinder head (1) according to claim 1 or 2, **characterised in that** the two inlet channels (4, 5) are arranged substantially parallel, preferably also substantially parallel to a transverse plane (16) of the cylinder head (1).

4. The cylinder head (1) according to one of claims 1 to 3, **characterised in that** the two inlet channels (4, 5) start from a common inlet main channel (20).

5. The cylinder head (1) according to one of claims 1 to 4, wherein the first inlet channel (4) has a spiral tongue (17), **characterised in that** the tongue radius R of the spiral tongue (17) satisfies the condition: R = (0.05 to 0.1) * $d_v$, where $d_v$ is the inner valve seat diameter.

6. The cylinder head (1) according to one of claims 1 to 5, wherein the first inlet channel (4) has a spiral tongue (17), **characterised in that** the spiral tongue (17) of the first inlet channel (4) extends substantially normal to the channel central line (4').

7. The cylinder head (1) according to one of claims 1 to 6, wherein the first inlet channel (4) has a spiral tongue (17), **characterised in that** the maximum extension (a) of the spiral tongue (17) normal to the channel central line (4') is between 40% and 70% of the inlet width (b) of the first inlet channel (4) given directly upstream of the spiral tongue (17).

8. The cylinder head (1) according to one of claims 1 to 7, wherein the first inlet channel (4) has a spiral tongue (17), **characterised in that** a distance c between the spiral tongue and a centre of the valve of the first inlet opening, measured normal to the first inlet cross-section, satisfies the condition: c = (0.1 to 0.6) * $d_v$, where $d_v$ is the inner valve seat diameter.

9. The cylinder head (1) according to one of claims 1 to 8, **characterised in that** between the outer inlet channel wall (4c) of the first inlet channel (4) and the transition surface (18), a radius of curvature (r) is formed, which is preferably about (0.1 to 0.3) * $d_v$, where $d_v$ is the inner valve seat diameter.

10. The cylinder head (1) according to one of claims 1 to 9, wherein the first inlet channel (4) has a spiral tongue (17), **characterised in that** the transition surface (18) goes over tangentially into an inner wall (19) of the spiral roof (19a) running around the valve stem of the first inlet channel (4).

**Revendications**

1. Culasse (1) pour un moteur à combustion interne comportant un dispositif de canal d'entrée (3) équipé d'au moins deux ouvertures d'entrée (6, 7) par cylindre (2) qui sont essentiellement également éloignées d'une surface de bride d'entrée latérale (8), un premier canal d'entrée (4) réalisé sous la forme d'un canal spiral conduisant à la première ouverture d'entrée (6) et un second canal d'entrée (5) conduisant à la seconde ouverture d'entrée (7) et les deux canaux d'entrée (4, 5) étant séparés l'un de l'autre par une paroi de séparation (15) déjà à l'extérieur de la zone du cylindre (2), et un angle de référence (φ) compris entre 230° et 330° étant défini dans la direction d'un écoulement hélicoïdal dans le cylindre (2) entre une droite reliant le centre de soupape (6a) de la première ouverture d'entrée (6) et le centre du cylindre (10) d'une part, et un rayon (12) définissant une première section d'entrée (13) du premier canal d'entrée (4) dans une chambre de soupape (14), partant du centre de soupape (6a) de la première ouverture d'entrée (6) d'autre part, une tangente (t) étant formée sur un contour externe en spirale (4b) dans la zone de la première section d'entrée (13) parallèlement au plan transversal (16) de la tête de cylindre (1), et le premier canal d'entrée (4) s'étendant essentiellement perpendiculairement à la surface de bride d'entrée (8),
**caractérisée en ce qu'**
entre la paroi externe (4c) du premier canal d'entrée (4) et la languette spirale (17) est formée une surface de transition (18) dont la tangente (18a) définit au niveau d'un point d'inflexion ou d'un segment droit avec le plan longitudinal (11) de la culasse (1), un angle (ß) tel que $0° \leq ß \leq 20°$.

2. Culasse (1) conforme à la revendication 1,
   **caractérisée en ce que**
   le premier canal d'entrée (4) est essentiellement rectiligne.

3. Culasse (1) conforme à la revendication 1 ou 2,
   **caractérisée en ce que**
   les deux canaux d'entrée (4, 5) sont essentiellement parallèles, de préférence également essentiellement parallèles au plan transversal (16) de la culasse (1).

4. Culasse (1) conforme à l'une des revendications 1 à 3,
   **caractérisée en ce que**
   les deux canaux d'entrée (4, 5) partent d'un canal d'entrée principal (20) commun.

5. Culasse (1) conforme à l'une des revendications 1 à 4, dans laquelle le premier canal d'entrée (4) comporte une languette spirale (17), **caractérisée en ce que**
   le rayon R de la languette spirale (17) remplit la condition suivante : $R = (0.05 \text{ à } 0.1))*d_v$, $d_v$ correspondant au diamètre interne du siège de soupape.

6. Culasse (1) conforme à l'une des revendications 1 à 5, dans laquelle le premier canal d'entrée (4) comporte une languette spirale (17), **caractérisée en ce que**
   la languette spirale (17) du premier canal d'entrée (4) s'étend essentiellement perpendiculairement à la ligne médiane (4') du canal.

7. Culasse (1) conforme à l'une des revendications 1 à 6, dans laquelle le premier canal d'entrée (4) comporte une languette spirale (17), **caractérisée en ce que**
   l'étendue maximum (a) de la languette spirale (17) perpendiculairement à l'axe médian (4') du canal est comprise entre 40 % et 70 % de la largeur d'écoulement (b) du premier canal d'entrée (4) définie immédiatement en amont de la languette spirale (17).

8. Culasse (1) conforme à l'une des revendications 1 à 7, dans laquelle le premier canal d'entrée (4) comporte une languette spirale (17), **caractérisée en ce que**
   la distance (c) mesurée perpendiculairement à la première section d'entrée entre la languette spirale et le centre de soupape de la première ouverture d'entrée remplit la condition suivante : $c = (0.1 \text{ à } 0.6)*d_v$, $d_v$ étant le diamètre interne du siège de la soupape.

9. Culasse (1) conforme à l'une des revendications 1 à 8,
   **caractérisée en ce qu'**
   entre la paroi externe (4c) du premier canal d'entrée (4) et la surface de transition (18) est formé un rayon de courbure (r) qui est de préférence essentiellement égal à $(0.1 \text{ à } 0.3)*d_v$, $d_v$ étant le diamètre interne du siège de soupape.

10. Culasse (1) conforme à l'une des revendications 1 à 9, dans laquelle le premier canal d'entrée (4) comporte une languette spirale (17), **caractérisée en ce que**
    la surface de transition (18) s'étend tangentiellement dans une paroi interne (19) du toit spiral (19a) entourant l'arbre de soupape du premier canal d'entrée (4).

Fig.1

Fig.2

Fig.3

Fig.4

8

## Fig.5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- AT 402433 B
- AT 004876 U1
- WO 7900707 A
- DE 3836550 A1
- EP 2017454 A1
- JP 60261926 A
- JP 62003935 U
- JP 2000303846 A
- JP 54046914 U